# DEMANDE DE BREVET EUROPEEN

(11) **EP 3 115 831 A1**
(43) Date de publication de la demande: **11.01.2017**
(21) Numéro de dépôt: 15306149.4
(22) Date de dépôt: 10.07.2015
(51) Int. Cl.: G02C 7/10, G02C 7/08

(54) **ELEMENT OPTIQUE CONNECTE**

(71) Demandeur: ESSILOR INTERNATIONAL (COMPAGNIE GENERALE D'OPTIQUE), 94220 Charenton-le-Pont (FR)
(72) Inventeur: BALLET, Jérôme, 94227 CHARENTON LE PONT CEDEX (FR); ARCHAMBEAU, Samuel, 94227 CHARENTON LE PONT CEDEX (FR); CANO, Jean-Paul, 94227 CHARENTON LE PONT CEDEX (FR); PERROT, Stéphane, 94227 CHARENTON LE PONT CEDEX (FR)
(74) Mandataire: Cabinet Plasseraud

(57) **Abrégé**

L'invention concerne un procédé de connexion d'un élément optique (5), par exemple un verre ophtalmique, à un réseau de communication (1),
dans lequel un identifiant est attribué à l'élément optique pour router des données via le réseau en fonction dudit identifiant.

## Description

### DOMAINE TECHNIQUE DE L'INVENTION

La présente invention appartient au domaine des éléments optiques. Elle concerne en particulier un élément optique, tel qu'un verre ophtalmique, auquel est affecté un identifiant dans un réseau de communications pour que des instructions à destination et/ou à partir du verre puissent être routées dans le réseau.

### ART ANTERIEUR

De nombreuses fonctions sont attachées aux éléments optiques. En particulier, des fonctionnalités de correction, de protection solaire ou contre des débris, décoratives ou autres sont classiquement attachées aux éléments optiques.

Les paramètres de mise en oeuvre de ces fonctionnalités sont toutefois invariants, ou très difficilement modifiables. Par exemple, lorsqu'un porteur d'une paire de lunette de protection solaire entre dans un tunnel, le degré d'opacité des verres n'est plus adapté à l'environnement du porteur.

Il existe donc un besoin de contextualisation des fonctionnalités liées aux éléments optiques.

### RESUME DE L'INVENTION

La présente invention vient améliorer la situation.

A cet effet, un premier aspect de l'invention concerne un procédé de connexion d'un élément optique, par exemple un verre ophtalmique, à un réseau de communication, dans lequel un identifiant est attribué à l'élément optique pour router des données via le réseau en fonction dudit identifiant.

On entend par « élément optique » tout dispositif optique destiné à être placé dans, sur, proche, sensiblement en regard ou en amont d'un organe de vision, tel qu'un oeil, dans le sens d'un rayon lumineux généré par une source lumineuse. Dans une application non limitative, l'élément optique est un verre ophtalmique monté sur un dispositif, tel qu'une paire de lunette, destiné à une personne humaine. L'élément optique peut être également de façon non limitative, une lentille de télescope ou de microscope, un hublot d'avion, des vitres d'un bâtiment, un implant intraoculaire, une lentille de contact ophtalmique, un pare-brise ou des rétroviseurs de voiture ou encore la lentille d'une caméra.

Par exemple, un tel élément optique peut avoir un effet correctif (lunettes de vue) ou non (verres dits « planos »). L'élément optique peut être opacifiant (lunettes de soleil), informatif (affichage d'informations) ou encore ne présenter aucun effet (lunettes décoratives ou de protection).

On entend par « réseau de communication » un ensemble d'équipements reliés entre eux pour échanger des informations. Le choix du réseau est typiquement fonction des contraintes techniques imposées au réseau.

Ainsi, pour une liaison radio courte distance (typiquement inférieure à 10 mètres), un réseau de type Bluetooth, MARQUE DEPOSEE, (et notamment la version 4.1 « Low energy », pour basse consommation en français) ou ZigBee, MARQUE DEPOSEE, pourront par exemple être utilisés. Pour une liaison radio moyenne distance (typiquement inférieure à 100 mètres), un réseau de type wifi ou un réseau orienté domotique, comme par exemple le réseau Enocean, MARQUE DEPOSEE, de fréquence 868 Mhz pourront par exemple être utilisés. Pour une liaison radio très longue distance (typiquement supérieure à un kilomètre), un réseau ZigFox pourra par exemple être utilisé.

Pour une liaison optique courte distance (pouvant typiquement couvrir l'intérieur d'une pièce), on pourra par exemple utiliser un réseau LiFi, MARQUE DEPOSEE et pour une liaison à induction magnétique très courte distance un réseau QI.

D'autres protocoles pourront être utilisés, tels que par exemple un réseau IP, Ethernet, TCP/UDP, Internet, un réseau utilisant un émetteur-récepteur asynchrone universel, par exemple de type UART, pour « Universal Asynchronous Receiver Transmitter » en anglais, un réseau reposant sur le protocole http, pour « Hyper Text Transfert Protocol » (« protocole de transfert hypertexte» en français), etc.

On entend par « router des données » le mécanisme par lequel des chemins sont sélectionnés dans le réseau pour acheminer les données d'un expéditeur jusqu'à un ou plusieurs destinataires. En particulier, les données acheminées à destination et depuis l'élément optique sont orientées dans le réseau grâce à l'identifiant de l'élément optique.

Ainsi, les instructions peuvent être reçues et émises sur l'élément optique en utilisant le réseau de communication. Dès lors, l'élément optique est apte à recevoir des instructions et/ou informations aptes à modifier par exemple des paramètres de mise en oeuvre de fonctionnalités du verre optique. Le fonctionnement de l'élément optique peut donc prendre en compte un contexte transmis par le biais du réseau de communication. En outre, des données peuvent être acquises par l'élément optique et transmises grâce au réseau de communication.

Dans un mode de réalisation, le procédé comporte les étapes de :
- émission d'au moins une instruction apte à être exécutée par un processeur, l'instruction étant émise par un dispositif électronique connecté au réseau de communication à destination d'une interface de communication réseau reliée à l'élément optique ;
- réception de l'instruction par l'interface de communication réseau reliée à l'élément optique.

Ainsi, tout dispositif électronique connecté au réseau peut transmettre des instructions à l'élément optique. De tels dispositifs électroniques peuvent comprendre une interface utilisateur, pour qu'un utilisateur puisse facilement renseigner des instructions. Ces dispositifs peuvent également comprendre des capteurs qui peuvent générer de manière autonome, ou en combinaison avec d'autres dispositifs tels que carte mère ou processeur, des instructions.

Dans un autre mode de réalisation, l'élément optique est relié à un processeur et à une mémoire et le procédé comporte en outre les étapes de stockage de l'instruction reçue dans la mémoire reliée à l'élément optique et d'exécution de l'instruction par le processeur relié à l'élément optique. Ainsi, l'élément optique intègre les composants pour la mise en oeuvre des instructions, ce qui, au niveau industriel, facilite l'intégration de tels éléments optiques.

Dans un mode de réalisation, l'instruction est apte à être exécutée par le processeur pour l'activation d'une fonctionnalité par exemple pour l'activation d'une fonctionnalité liée à l'élément optique, pour l'activation d'une fonctionnalité liée à un dispositif électronique connectable au réseau ou pour l'activation d'une fonctionnalité liée à un dispositif connectable à l'élément optique. L'élément optique peut donc être destinataire des instructions ou simplement relai de ces instructions vers un autre dispositif.

Dans un autre mode de réalisation, l'élément optique est un verre ophtalmique de type électroactif. Dans ce mode de réalisation, l'activation de la fonctionnalité liée au verre comporte une modification d'au moins une caractéristique d'une cellule électroactive comprise dans le verre.

On entend par « verre électroactif » tout dispositif optique pour lequel au moins une caractéristique varie sous l'influence d'un signal électrique et/ou éléctromagnétique. Typiquement, une variation de l'amplitude d'un signal électrique appliqué à un verre électroactif modifie une caractéristique de ce verre.

Un verre dont la puissance de correction dépend d'un signal électrique, pour lequel des informations visuelles sont apportées au porteur (par exemple via un écran ou une source lumineuse intégrée au verre), possédant des combineurs actifs (tels que définis dans la demande de brevet EP15306097) ou encore intégrant des sources lumineuses pour un traitement de luminothérapie sont des exemples de verres électroactif.

On entend par « cellule électroactive » les moyens utilisés pour faire varier au moins une caractéristique du verre en fonction d'un signal électrique.

Ainsi, les caractéristiques du verre sont adaptées aux instructions reçues dans le réseau. Dès lors, le verre s'adapte avantageusement à son environnement (dans le cas où les instructions proviennent d'un capteur) ou aux exigences d'un utilisateur.

Dans un mode de réalisation, le procédé comporte en outre, les étapes d'acquisition d'une mesure par un capteur et de détermination de l'instruction à partir de la mesure acquise par le capteur. Les instructions sont donc rendues dépendantes de facteurs relatifs à l'environnement du verre, augmentant ainsi la pertinence des instructions générées. En particulier, un asservissement des instructions à la mesure rend possible une réponse directe et adaptée de l'élément optique.

Dans un autre mode de réalisation, la mesure comprend au moins un élément parmi une mesure de proximité, une mesure de géolocalisation, une mesure d'accélération, une mesure gyroscopique, une mesure de pression, une mesure de température, une mesure de suivi d'un mouvement d'au moins un oeil, une mesure de télémétrie, un signal audio, un signal vidéo, une mesure d'intensité lumineuse, dans au moins une bande de fréquence du spectre électromagnétique. La mesure de proximité peut être acquise entre l'élément optique et un utilisateur de l'élément optique, entre l'élément optique et un terminal externe (par exemple entre une paire de lunette et un téléphone intelligent (smartphone en anglais) connecté à l'élément optique constituant les verres de la paire de lunette), entre un élément optique et un autre élément optique, etc.

La mesure de géolocalisation peut correspondre à au moins un élément parmi une localisation géographique (par exemple via une latitude et une longitude), une position dans l'espace (par exemple dans un référentiel galiléen), une mesure de proximité par rapport à un autre objet, etc.

La prise en compte de ces mesures, individuellement ou en combinaison, améliore la pertinence des instructions transmises à l'élément optique. Le confort proposé par l'élément optique est donc sensiblement amélioré, les caractéristiques de l'élément optique étant adaptées à l'utilisateur de cet élément optique.

Dans un mode de réalisation, l'instruction est déterminée à partir d'une information collectée par un dispositif de collecte. Un tel dispositif de collecte est apte à collecter une énergie électrique, par exemple acquise via un capteur solaire (cellule photovoltaïque) ou un capteur d'une énergie thermique ou mécanique. Ce capteur d'énergie thermique ou mécanique peut, par exemple et de façon non limitative, être apte à capter l'énergie générée au niveau du visage (chaleur du corps, battements de paupière, mouvement de la bouche, micro-mouvements du visage, micro courants de la peau...). On entend par « mesure », ci-après, toute information acquise par le capteur de mesure et/ou le dispositif de collecte.

Dans un mode de réalisation, le capteur est compris dans au moins un élément parmi un terminal connecté au réseau de communication, l'élément optique, une paire de lunette comportant une monture sur laquelle est monté l'élément optique, une monture d'une paire de lunette sur laquelle est intégré l'élément optique. Ainsi, l'élément optique bénéficie ou fait bénéficier d'instructions adaptées aux mesures faites par différents capteurs.

Dans un autre mode de réalisation, un terminal est connecté au réseau de communication, le terminal étant en outre connecté à un réseau de données. Dans ce mode de réalisation, le procédé comporte en outre, les étapes de :
- acquisition par le terminal via le réseau de données d'une information relative à un environnement d'au moins un élément parmi l'élément optique, un terminal, un utilisateur de l'élément optique et/ou du terminal ;
- détermination de l'instruction à partir de l'information.

On entend par « réseau de données », tout type de réseau apte à fournir des données complémentaires aux données du réseau de communication. Dans un mode de réalisation, le réseau de données est distinct du réseau de communication. En particulier, lorsque le réseau de communication est un réseau local (par exemple bluetooth), le réseau de données peut par exemple être un réseau étendu (par exemple Internet via une connexion 4G).

L'information relative à l'environnement est typiquement une information de contexte disponible sur le réseau de données (par exemple Internet) telle qu'une information relative à la météo, à une carte (données topographiques), à une actualité, etc.

Les moyens disponibles au niveau du terminal sont ainsi avantageusement utilisés pour améliorer la pertinence des instructions transmises à l'élément optique.

Dans un mode de réalisation, les données sont chiffrées. Typiquement, un chiffrage de type AES(« Advanced Encryption Standard » soit « standard de chiffrement avancé » en français) et/ou RSA peut être utilisé pour chiffrer les données. Les communications peuvent également être chiffrées, par exemple via https (« HyperText Transfer Protocol Secure », soit « protocole de transfert hypertexte sécurisé » en français) ou WPA (« Wi-Fi Protected Access » pour « accès protégé wifi » en français), pour sécuriser ces données.

Dans un autre mode de réalisation, l'élément optique est un verre électrochrome. On entend par « verre électrochrome », un verre dont au moins une couleur peut être modifiée en fonction d'un signal électrique.

Dans un mode de réalisation, le procédé comporte l'étape d'émission d'au moins un message par une interface de communication reliée à l'élément optique à destination d'un dispositif électronique connecté au réseau de communication.

Un deuxième aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un élément optique, tel qu'un verre ophtalmique, apte à être connecté à un réseau de communication, et comportant une mémoire adaptée pour stocker un identifiant attribué à l'élément optique pour router des données via le réseau en fonction dudit identifiant.

Dans un mode de réalisation du troisième aspect de l'invention, l'élément optique est relié à une interface de communication apte à recevoir une instruction envoyée par un dispositif électronique connecté au réseau de communication. Dans ce mode de réalisation, l'élément optique comporte en outre un processeur apte à exécuter l'instruction.

Un quatrième aspect de l'invention concerne un système comportant :
- un élément optique selon le troisième aspect de l'invention ;
- un terminal comprenant un capteur et connecté au réseau de communication, le terminal comprenant en outre un processeur adapté pour effectuer les opérations suivantes :
   - réception d'une mesure acquise par le capteur ;
   - détermination, à partir de la mesure acquise par le capteur compris dans le terminal, d'une instruction à destination de l'élément optique.

Un cinquième aspect de l'invention concerne un dispositif ophtalmique destiné à être porté par un utilisateur, comportant :
- au moins un élément optique selon le troisième aspect de l'invention ;
- un capteur ;
- un processeur adapté pour effectuer les opérations suivantes :
   - réception d'une mesure acquise par le capteur ;
   - détermination d'une instruction à partir de la mesure acquise par le capteur.

### BREVE DESCRIPTION DES DESSINS

D'autres caractéristiques et avantages de l'invention apparaîtront à l'examen de la description détaillée ci-après, et des dessins annexés sur lesquels:
- la figure 1 illustre un élément optique connecté, selon un mode de réalisation de l'invention ;
- la figure 2A illustre un environnement possible pour l'élément optique, selon un premier mode de réalisation de l'invention ;
- la figure 2B illustre un environnement possible pour l'élément optique, selon un deuxième mode de réalisation de l'invention ;
- la figure 2C illustre un environnement possible pour l'élément optique, selon un troisième mode de réalisation de l'invention ;
- la figure 3 est un diagramme illustrant les étapes d'un procédé de connexion d'un élément optique, selon un mode de réalisation de l'invention ;
- la figure 4 illustre une architecture matérielle de dispositifs selon l'invention, dans un mode de réalisation.

### DESCRIPTION DETAILLEE

On décrit ci-après l'invention dans son application, non limitative, à un élément optique qui est un verre ophtalmique compris sur une paire de lunette.

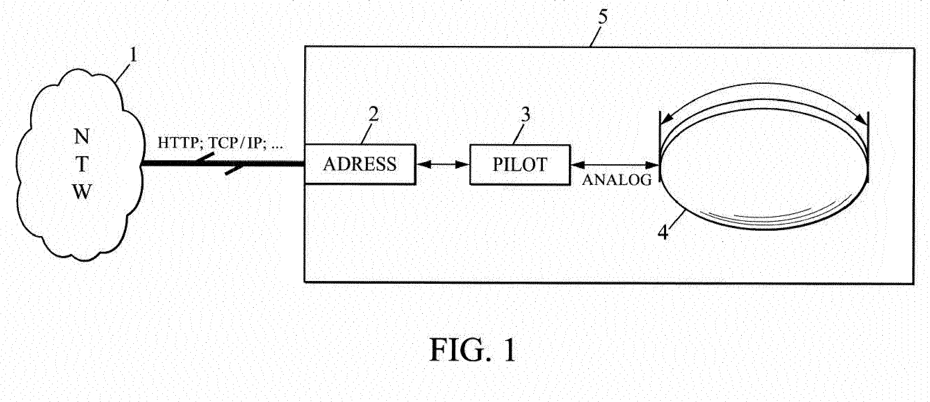

La figure 1 illustre ainsi un verre 5 connecté à un réseau de communication 1. Sur les figures 1 et suivantes, on représente le canal de communication entre le verre et le réseau 1 par un trais épais au-dessus duquel il est fait mention d'exemples de protocoles (http ; TCP/IP; ...) pouvant être utilisés pour acheminer les données dans ce canal de communication.

Un identifiant est attribué au verre 5 pour router des données via le réseau en fonction dudit identifiant. Selon le type de réseau utilisé, et donc selon le protocole associé à ce type de réseau, l'identifiant peut être de différentes natures. Ainsi, pour un réseau IP, l'identifiant est une adresse IP, une adresse MAC, Media Access Control (contrôle d'accès au support en français), pour un réseau Ethernet, etc.

Le verre 5 comprend un circuit de pilotage 3 d'une cellule électroactive 4 et une interface de communication 2 apte à communiquer avec un dispositif électronique connecté au réseau de communication. L'interface de communication et/ou le circuit de pilotage peuvent être simplement reliés (par exemple via une liaison filaire ou sans-fils) au verre 5. L'interface et/ou le circuit peuvent également être incrustés, collés ou encore moulés dans le verre 5.

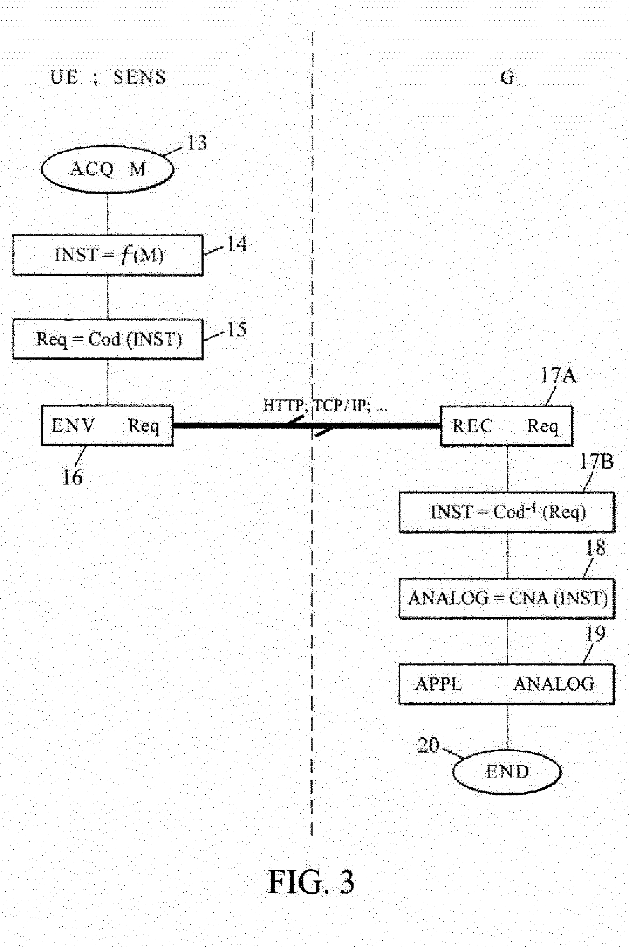

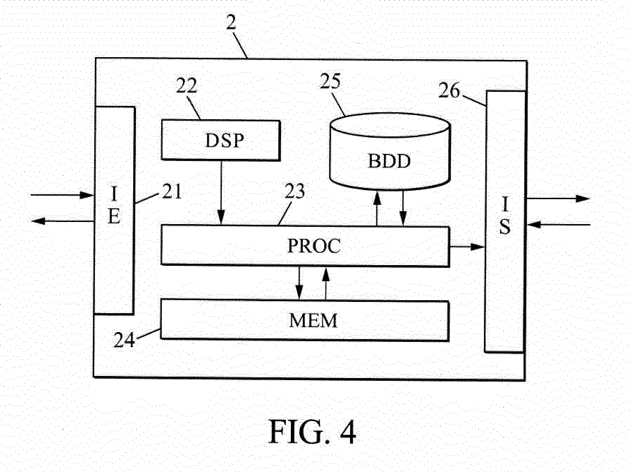

Un exemple de fonctionnement et de détail de l'architecture matérielle de l'interface de communication et du circuit de pilotage 3 sont respectivement donnés aux figures 3 et 4.

La cellule électroactive 4 comporte des moyens aptes à modifier au moins une caractéristique du verre par l'application d'un signal électrique, par exemple analogique (représenté par la double flèche ANALOG sur la figure 1).

La cellule électroactive peut ainsi faire varier la puissance de correction du verre, apporter des informations visuelles au porteur du verre (typiquement quand un écran est intégré au verre), donner des instructions à des combineurs actifs, activer des sources lumineuses, faire varier un degré d'opacité ou de transmission (aptitude du verre à transmettre ou non un faisceau lumineux) du verre, faire varier une consommation électrique du verre, etc.

Un verre dont la puissance de correction dépend d'un signal électrique, possédant des combineurs actifs (tels que définis dans la demande de brevet EP15306097) ou encore intégrant des sources lumineuses pour un traitement de luminothérapie sont d'autres exemples de verres électroactif aptes à voir au moins une de leurs caractéristiques modifiées par une cellule électroactive.

En particulier, le verre peut comporter des moyens d'affichage aptes à afficher une information visuelle sur le verre. Par exemple, un écran, un combineur actif apte à générer un hologramme, ou au moins une source lumineuse peut être intégrée au verre.

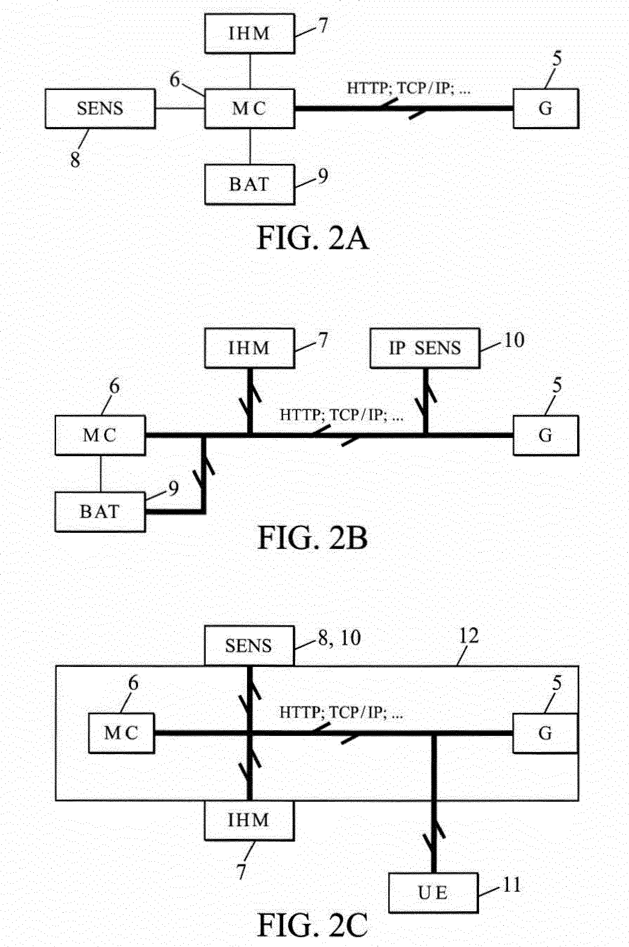

Le réseau 1 est constitué d'une pluralité de dispositifs électroniques. Des exemples d'agencement de dispositifs électroniques reliés au verre 5 via le réseau 1 sont maintenant donnés en référence aux figures 2A, 2B et 2C.

La figure 2A illustre schématiquement un agencement de dispositifs électroniques, selon un premier mode de réalisation. Dans ce premier mode de réalisation, au moins un verre 5 est compris sur une paire de lunette et relié à un capteur 8, une carte mère 6, une batterie 9 et une interface homme machine 7.

Le capteur 8 de collecte ou de mesure est typiquement :
- un capteur de proximité fonctionnant par exemple via une mesure de temps d'émission/réception d'une onde électromagnétique. La mesure de proximité peut être faite entre le verre 5 et un porteur de la paire de lunette, entre l'élément optique et un terminal externe, entre le verre 5 et un autre élément optique, etc.
- un capteur d'une mesure de localisation, par exemple de géolocalisation : La mesure de géolocalisation peut correspondre à au moins un élément parmi une localisation géographique (par exemple via une latitude et une longitude), une position dans l'espace (par exemple dans un référentiel galiléen), une mesure de proximité par rapport à un autre objet, etc. Un tel capteur est typiquement un dispositif GPS, pour « global positioning system », système de positionnement mondial en français, un inclinomètre, un gyroscope, un télémètre, un accéléromètre, etc.
- un inclinomètre pour l'acquisition d'une mesure d'inclinaison ;
- un gyroscope pour l'acquisition d'une mesure gyroscopique ;
- un télémètre pour l'acquisition d'une mesure de distance ;
- un manomètre pour l'acquisition d'une mesure de pression ;
- un thermomètre pour l'acquisition d'une mesure de température ;
- un dispositif « eye tracker » (pour dispositif de suivi du mouvement de l'oeil) apte à acquérir une mesure de suivi d'un mouvement d'au moins un oeil du porteur de la paire de lunette ;
- un microphone pour l'acquisition d'un signal sonore ;
- une caméra pour l'acquisition d'un signal vidéo ;
- un capteur d'une mesure d'intensité lumineuse, dans au moins une bande de fréquence du spectre électromagnétique ;
- un dispositif de collecte apte à collecter une énergie électrique, par exemple acquise via un capteur solaire (cellule photovoltaïque) ou un capteur d'une énergie mécanique (capteur de vibrations, par exemple sur un visage), une énergie thermique, etc.

On entend par « mesure », ci-après, toute information acquise par le capteur de mesure et/ou le dispositif de collecte.

L'interface homme machine 7 comprend un moyen apte à interagir avec un utilisateur du verre 5, tel que le porteur de la paire de lunette. Par exemple, il peut s'agir d'un simple interrupteur pour activer ou désactiver les fonctions électroactives du verre 5, ou d'un touchpad, d'une interface gestuelle, d'une interface pilotée par onde cérébrale ou par le regard ou la voix.

La batterie 9 est un dispositif permettant d'alimenter en énergie les composants 8, 7, 6 et le verre 5. La batterie 9 peut par exemple être de type Lithium/ion ou encore Nickel/Cadmium.

La batterie 9 peut également être intégrée au verre 5. Dans cette situation, le verre 5 peut comporter des moyens de collecte et/ou de distribution d'une énergie, tels que des cellules photovoltaïques ou des capteurs thermiques. Ceci peut présenter un intérêt particulier dans le cas où au moins deux verres sont connectés entre eux via le réseau 1 et qu'un des verres présente une consommation supérieure à l'autre. Dans cette situation, le verre présentant la plus forte consommation pourra requérir et obtenir un supplément d'énergie de la batterie intégrée au verre présentant une consommation plus faible.

Dans ce premier mode de réalisation, la carte mère 6 relie les composants 7, 8, 9 avec le verre 5. La carte mère 6 centralise donc la gestion des fonctions opérées par les composants 7, 8, 9 et comporte une interface de communication apte à émettre et/ou recevoir des données à destination et/ou à partir du verre 5, via le réseau 1.

Les communications faites entre les composants 7, 8, 9 et la carte mère 6 sont typiquement assurées par des protocoles bas-niveaux, tels que Ethernet, RNIS (réseau numérique à intégration de services (en anglais ISDN pour Integrated Services Digital Network)), HomeRF, IEEE 1394 (FireWire), Thunderbolt, Wireless USB, Bluetooth, Wi-Fi, etc.

Dans un deuxième mode de réalisation, certains composants peuvent directement communiquer entre eux et avec le verre 5 via le réseau 1. Ainsi, sur la figure 2B, un capteur IP 10 acquiert des données et est apte à coder ces données en paquets IP pour les transmettre aux autres dispositifs connectés au réseau 1. Le verre 5 peut ainsi accéder directement aux données du capteur IP 10 sans passer par la carte mère ce qui permet de simplifier l'architecture électronique, et en particulier la carte mère qui ne gère plus le capteur IP10.

Dans un troisième mode de réalisation, ici décrit en référence à la figure 2C, la paire de lunette (référencé 12 sur la figure 2C) est connecté via le réseau 1 à un terminal externe 11. La liaison entre le terminal 11 et la paire de lunette 12 peut-être filaire, sans-fils, optique, à induction, etc. Sur la figure 2C, on a représenté une connexion selon un même protocole entre les composants de la lunette 12 et le terminal 11. En variante, des protocoles différents peuvent être utilisés selon les liaisons.

Le terminal 11 peut être un smartphone, une tablette numérique, une montre connectée, un ordinateur de bureau ou un ordinateur portable, un terminal intégré dans un véhicule automobile ou dans un GPS, un terminal dédié utilisé pour la fabrication et/ou la configuration de verres ophtalmiques, une autre paire de lunette comportant des verres connectés ou tout type de dispositif électronique apte à être connecté au réseau 1. Le terminal 11 peut comporter un capteur, tel que décrit ci-avant pour les références 8 et 10.

Le capteur, tel que décrit ci-avant pour les références 8 et 10, peut également être directement intégré au verre 5. Dans cette situation, des données peuvent être émises par le verre 5 à destination de dispositifs électroniques connectés au réseau 1. En particulier, plusieurs verres selon l'invention peuvent ainsi communiquer entre eux.

On décrit maintenant en référence à la figure 3 un procédé de connexion du verre 5 au réseau 1, selon un mode de réalisation de l'invention.

Une donnée M est d'abord acquise à une étape 13. Cette donnée peut correspondre à une mesure acquise par les capteurs 8 et/ou 10 ou par un capteur compris sur le terminal 11 ou compris sur un verre connecté d'une autre paire de lunette, à une préférence indiquée par un utilisateur via l'interface homme machine 7, à une condition prédéterminée stockée sur une mémoire de l'un des composants 5, 6, 7, 8, 9, 10 et/ou 11 ou à toute requête apte à être transmise par tout type de dispositif connecté au verre 5.

La donnée M peut ensuite être traitée dans une étape 14 pour qu'une instruction INST interprétable (par exemple exécutable par un processeur apte à permettre l'activation d'une fonctionnalité liée à l'élément optique) par le verre 5 soit générée. Une fonction f peut être appliquée à la donnée M pour générer cette instruction INST. Une liste non-exhaustive des instructions (encore appelées requêtes, suite à une étape 15 de mise en forme décrite ci-après) pouvant être générées est donnée ci-après.

Dans une première application non-limitative de la présente invention, une mesure de proximité entre la paire de lunette 12 et un smartphone 11 est utilisée par la fonction f pour générer une instruction de variation de la transmission du verre 5. Ainsi, si un verre électrochromique est activé à l'état teinté et si le porteur de la paire de lunette se rapproche de l'écran du smartphone, par exemple pour le consulter, le système pourra réagir en augmentant la transmission du verre 5 pour que ce porteur puisse continuer à voir l'écran dans de bonnes conditions.

Dans un mode de réalisation, le terminal 11 est connecté au réseau de communication 1 et à un réseau de données. Dans ce mode de réalisation, le terminal 11 acquiert la mesure M via le réseau de données, par exemple un réseau 4G.

Dans une application non-limitative de ce mode de réalisation, une mesure de géolocalisation est effectuée par un capteur du terminal 11 et/ou verre 5. Cette mesure est alors combinée avec une information topographique obtenue par le réseau de données pour déterminer si le terminal 11 et/ou le verre 5 (par exemple via une mesure de proximité entre le verre 5 et terminal 11) est situé dans un tunnel. Si oui, une instruction est envoyée au verre 5 pour que ce verre 5 s'éclaircisse. Au contraire, si à l'aide du réseau de données, on détermine que le terminal 11 et/ou le verre 5 entre dans une zone d'éclairement important (données météo acquises sur Internet, typiquement), une instruction d'opacification du verre 5 pourra être envoyée.

En variante, l'instruction acquise à l'étape 13 est déjà interprétable par le verre 5.

A une étape 15, l'instruction INST est mise en forme pour pouvoir être transmise au verre 5 via le réseau 1 sous la forme d'au moins une requête Req. Cette étape de mise en forme dépend du type de protocole utilisé pour les communications au sein du réseau 1.

On a décrit ci-avant un mode de réalisation dans lequel des données sont envoyées depuis un dispositif connecté au réseau 1 vers le verre 5. La présente invention couvre également le cas où le verre 5 émet des données à destination d'un dispositif connecté au réseau 1. Le cas de l'émission de données à partir du verre 5 peut être directement déduit du cas de la réception de données par le verre 5.

Par exemple, la batterie 9 peut-être un chargeur QI sans-fils. Dans cette situation, le verre 5 communique en permanence avec la batterie 9 pour lui indiquer la puissance électrique dont il a besoin pour fonctionner. Ainsi, dans cette situation, c'est bien le verre 5 qui émet des requêtes à destination d'un dispositif électronique connecté au réseau 1.

On donne ci-après une liste non exhaustive des données (requêtes en particulier) pouvant être traitées pour être émises à destination ou à partir du verre 5.

### Requêtes de commande de la fonction électroactive :

- commande de l'allumage/extinction du verre 5,
- commande d'un niveau de transmission, avec envoi du niveau de transmission souhaité,
- commande de prise en compte d'un flux lumineux reçu par le verre 5 pour changer la transmission, avec envoi du niveau de flux lumineux en fonction de la transmission retenue,
- sélection d'une loi de détermination d'une transmission en fonction d'un flux lumineux parmi plusieurs lois, avec envoi du numéro de la loi à utiliser,
- prise de contrôle sur la cellule par un système extérieur / contrôle rendu à la carte mère.

### Requêtes liées au paramétrage du verre électroactif :

- paramétrage des gammes de transmission min-max,
- paramétrage sur le nombre et la valeur de paliers de transmission, dans le cas d'utilisation de paliers de transmission
- paramétrage sur une vitesse de transition entre deux niveaux de transmission,
- paramétrage sur une loi de transmission en fonction d'un flux lumineux,
- paramétrage de cycles de pilotage de la cellule.

### Requêtes d'interrogation du verre :

- récupération de caractéristiques du verre (couleur, gamme de transmission, courbure de la cellule, forme de la cellule, matériaux de coques formant la cellule, date de fabrication, etc.)
- récupération de données d'usage : nombre d'heures de fonctionnement, consommation courante, statistiques sur les niveaux de transmission utilisés, statistiques sur les dynamiques de changement de transmission, etc

### Requêtes diverses :

- possibilité de stocker dans le verre des données personnelles telles que des données relatives à la fabrication des verres, mots de passe, données de supervision du porteur telles que des données à caractère médical (rythme cardiaque, taux de sucre dans le sang, etc.), etc.

Ces données sont préférentiellement chiffrées (chiffrage par AES/RSA) pour ne pas être accessibles à un tiers. Les communications entre les dispositifs du réseau 1 peuvent aussi être chiffrées (par exemple via https, WPA) pour sécuriser ces données.

D'autres requêtes peuvent aussi être envoyées, concernant non seulement le verre mais aussi le reste de la monture de la paire de lunette :

### Requête sur la monture :

- récupération du niveau de la batterie 9,
- paramétrage de la gestion d'énergie et/ou consommation du verre en fonction de la batterie,
- récupération des données acquises par le capteur 8 ou 10.

Le verre électroactif peut également envoyer des requêtes aux différents dispositifs électroniques connectés sur le réseau (dans la monture ou externes à la monture):
- requête envoyée aux capteurs de la monture,
- requête envoyée à la carte mère/batterie pour déterminer le niveau de charge,
- requête envoyée au terminal 11, par exemple pour déterminer la position de la monture par un GPS du terminal 11.

La requête Req est ensuite envoyée au verre 5 à une étape 16. Dans un mode de réalisation, la requête Req est envoyée à des instants spécifiques. Typiquement, pour optimiser la consommation énergétique de la batterie 9, il peut être prévu de n'activer que périodiquement la transmissions de données dans le réseau 1. Par exemple, le réseau ne peut être activé que toutes les heures.

Les moyens de transmissions des dispositifs électroniques connectés au réseau 1 peuvent également être mis en fonctionnement en fonction d'un niveau de charge de la batterie 9. Par exemple, ces moyens de transmissions peuvent n'être activés que quand la batterie 9 est en charge ou qu'elle présente un niveau de charge supérieur à un pourcentage prédéterminé, tel que 75 pourcent par exemple. De la même manière, la mise en fonctionnement d'au moins un composant compris dans au moins un dispositif électronique peut également dépendre d'un niveau de charge de la batterie 9.

Le fonctionnement de la batterie 9 peut être asservi à la mesure acquise par le capteur et/ou le dispositif de collecte.

La requête Req est reçue par l'interface de communication 2 à une étape 17A puis décodée (étapes symétriques à celles appliquées lors de la mise en forme 15) en l'instruction INST, toujours par l'interface de communication 2, à une étape 17B.

Dans une étape 18, un traitement est appliqué par le circuit de pilotage 3 à l'instruction INST. Ce traitement comporte par exemple une étape de Conversion Numérique Analogique, CNA, de l'instruction INST en un signal analogique ANALOG.

Dans une étape 19, ce signal ANALOG est alors envoyé à la cellule électroactive 4 pour que l'instruction INST soit exécutée par la cellule électroactive 4. Le procédé se termine ensuite à une étape 20.

On a décrit un mode de réalisation dans lequel des mesures étaient acquises par un capteur avant d'être traités (étape 14 ci-avant par exemple) pour générer une instruction ultérieurement envoyée au verre 5. On peut également prévoir qu'une instruction soit envoyée par un dispositif connecté au réseau 1 puis qu'une mesure soit acquise par un capteur compris sur le verre 5 pour pondérer, modifier et/ou adapter l'instruction reçue par le verre 5.

La **figure 4** représente un exemple d'architecture matérielle pour l'interface de communication 2, le circuit de pilotage 3, le capteur 8, le capteur IP 10, la carte mère 6, l'interface homme machine 7, le verre 5, la batterie 9 et/ou le terminal 11. Plus généralement, une telle architecture peut être utilisée par tout type de dispositif pour effectuer l'une au moins des étapes du procédé selon l'invention.

Comme mentionné ci-avant en référence à la figure 1, l'interface de communication 2 et/ou le circuit de pilotage 3 peut être directement intégré dans le verre 5 ou simplement relié par tout type de liaison au verre 5. L'interface de communication 2 et/ou le dispositif de pilotage 3 peut prendre la forme d'un boitier comprenant des circuits imprimés, d'une puce intégrée (par exemple par collage, moulage, surimpression, etc) au verre 5, d'un ordinateur, ou encore de tout type d'objet apte à communiquer avec le verre 5.

On décrit ci-après, à titre d'exemple non-limitatif, l'architecture matérielle de l'interface de communication 2 comprise dans le verre 5.

L'interface de communication 2 comprend une mémoire vive 24 pour stocker des instructions pour la mise en oeuvre par un processeur 23 du procédé tel que décrit ci-avant. Dans le cas du dispositif de pilotage 3, le processeur est notamment apte à exécuter l'instruction reçue par le verre 5. Le dispositif peut aussi comporter une mémoire de masse 25 pour le stockage de données destinées à être conservées après la mise en oeuvre du procédé.

L'interface de communication 2 peut en outre comporter un processeur de signal numérique (DSP) 22. Ce DSP 22 reçoit les requêtes Req pour démultiplexer, démoduler et amplifier, de façon connue en soi ces requêtes, comme expliqué ci-avant en référence à l'étape 17B de la figure 3. Le dispositif comporte également une interface d'entrée 21 pour la réception des requêtes Req et une interface de sortie 23 pour la transmission de l'instruction INST à destination du dispositif de pilotage 3.

L'architecture matérielle des autres composants, et notamment du circuit de pilotage 3, peut être déduite directement de celle de l'interface de communication 2. En particulier, le convertisseur numérique analogique du circuit de pilotage 3 peut être une fonction exécutée par le processeur 23 et/ou le DSP 22.

Dans un mode de réalisation, l'élément optique, tel qu'un verre ophtalmique, intègre une mémoire adaptée pour stocker un identifiant dans le réseau, une interface de communication apte à émettre et/ou recevoir au moins une instruction sur le réseau et un processeur apte à exécuter l'instruction reçue du réseau, de sorte notamment à activer une fonctionnalité, par exemple, liée à l'élément optique.

La présente invention ne se limite pas aux formes de réalisation décrites ci-avant à titre d'exemples ; elle s'étend à d'autres variantes.

Ainsi, on a décrit ci-avant en référence à la figure 3 un mode de réalisation comprenant une répartition spécifique de l'exécution des étapes 17A à 20 entre l'interface de communication 2 et le circuit de pilotage 3. Une autre répartition de l'exécution de ces étapes entre l'interface de communication 2 et le circuit de pilotage 3peut également être envisagée. Par exemple, l'étape 17A peut être exécutée par l'interface 2 et toutes les autres étapes par le circuit de pilotage 3. De plus, l'ordre des étapes peut être modifié et certaines étapes (notamment l'étape 15) ignorées.

En outre, on a décrit un agencement du verre 5 dans lequel le verre 5 comporte l'interface de communication 2 et le circuit de pilotage 3. D'autres agencements sont envisageables. Ainsi, l'interface de communication 2 et le circuit de pilotage 3 peuvent être rassemblés en un seul dispositif électronique, par exemple en un SoC pour « system on chip » (système sur puce en français).

L'invention a été décrite ci-avant pour son application à un verre ophtalmique compris sur une paire de lunettes. D'autres applications, telles que celles mentionnées ci-après, se déduisent directement de ce qui a été décrit pour une paire de lunette.

L'invention peut en effet être appliquée à des domaines très variés. Des applications diverses telles que par exemple un élément optique pour une paire de lunettes, pour un télescope, pour un hublot d'avion, des vitres d'un bâtiment, un pare-brise ou des rétroviseurs de voiture ou encore pour la lentille d'une caméra sont notamment couvertes par la présente invention.

En particulier, un pare-brise de voiture peut avantageusement être connecté à un réseau de communication et ainsi afficher des informations fournies par le réseau et utiles pour le conducteur. De même, les vitres d'un bâtiment peuvent être reliées par un réseau de communication à des capteurs de l'intensité lumineuse à l'extérieur du logement pour faire varier un degré d'opacité des vitres.

Une autre application possible de la présente invention consiste à connecter à un réseau de communication des verres situés dans un bâtiment, par exemple dans un espace ouvert de travail (« open space » en anglais). Dans de tels espaces ouverts de travail, il peut exister des sous-espaces individuels délimités par des vitres. Ces vitres peuvent comprendre des moyens d'affichage d'informations (par exemple un écran intégré à la vitre). Ainsi, un individu situé dans un premier sous-espace individuel de travail peut transmettre, via le réseau de communication, une information qui pourra être affichée sur les moyens d'affichage d'au moins une vitre d'un deuxième sous-espace individuel de travail.

Dans cette application, une batterie peut également être intégrée au verre. Le verre peut en outre comporter des moyens de collecte en énergie, tels que des cellules photovoltaïques, des capteurs thermiques, etc. L'énergie collectée peut être stockée (temporairement ou non) par la batterie. En outre, l'énergie collectée peut servir à alimenter le verre et/ou peut-être distribuée à destination de dispositifs externes au verre et aptes à être reliés au verre. Enfin, le fonctionnement de la batterie peut-être asservi aux mesures acquises par un capteur et/ou un dispositif de collecte (mise en marche et/ou régulation du fonctionnement lorsqu'une mesure spécifique est reçue, par exemple). Le présent exemple peut s'appliquer à tout autre dispositif optique comme par exemple un vitrage.

## Revendications

1. Procédé de connexion d'un élément optique (5), par exemple un verre ophtalmique, à un réseau de communication (1),
dans lequel un identifiant est attribué à l'élément optique pour router des données via le réseau en fonction dudit identifiant.

2. Procédé selon la revendication 1, comportant les étapes de :
- émission (16) d'au moins une instruction apte à être exécutée par un processeur, l'instruction étant émise par un dispositif électronique connecté au réseau de communication à destination d'une interface de communication réseau (2) reliée à l'élément optique ;
- réception (17A) de l'instruction par l'interface de communication réseau reliée à l'élément optique.

3. Procédé selon la revendication 2, dans lequel l'élément optique est relié à un processeur (23) et à une mémoire (24), le procédé comportant en outre les étapes de :
- stockage de l'instruction reçue dans la mémoire reliée à l'élément optique;
- exécution de l'instruction par le processeur relié à l'élément optique.

4. Procédé selon l'une des revendications 2 et 3, dans lequel l'instruction est apte à être exécutée par le processeur pour l'activation d'une fonctionnalité liée à l'élément optique, pour l'activation d'une fonctionnalité liée à un dispositif électronique connectable au réseau ou pour l'activation d'une fonctionnalité liée à un dispositif connectable à l'élément optique.

5. Procédé selon l'une de revendications 2 à 4, dans lequel l'élément optique est un verre ophtalmique de type électroactif, et dans lequel l'activation de la fonctionnalité liée au verre comporte une modification d'au moins une caractéristique d'une cellule électroactive (4) comprise dans le verre.

6. Procédé selon l'une de revendications 2 à 5, dans lequel le procédé comporte en outre, les étapes de :
- acquisition (13) d'une mesure par un capteur (8, 10) ;
- détermination (14) de l'instruction à partir de la mesure acquise par le capteur.

7. Procédé selon la revendication 6, dans lequel la mesure comprend au moins un élément parmi :
• une mesure de proximité ;
• une mesure de géolocalisation ;
• une mesure d'accélération ;
• une mesure gyroscopique ;
• une mesure de pression ;
• une mesure de température ;
• une mesure de suivi d'un mouvement d'au moins un oeil ;
• une mesure de télémétrie ;
• une énergie électrique ;
• un signal audio ;
• un signal vidéo ;
• une mesure d'intensité lumineuse, dans au moins une bande de fréquence du spectre électromagnétique.

8. Procédé selon l'une des revendications 6 ou 7, dans lequel le capteur est compris dans au moins un élément parmi :
• un terminal (11) connecté au réseau de communication ;
• l'élément optique (5);
• une paire de lunette (12) comportant une monture sur laquelle est monté l'élément optique.

9. Procédé selon l'une des revendications précédentes, dans lequel un terminal est connecté au réseau de communication, le terminal étant en outre connecté à un réseau de données, le procédé comportant en outre les étapes de :
- acquisition par le terminal via le réseau de données d'une information relative à un environnement d'au moins un élément parmi l'élément optique, un terminal, un utilisateur de l'élément optique et/ou du terminal ;
- détermination de l'instruction à partir de l'information.

10. Procédé selon l'une des revendications précédentes, dans lequel l'élément optique est un verre électrochrome.

11. Programme informatique comportant des instructions pour la mise en oeuvre du procédé selon l'une quelconque des revendications précédentes, lorsque ces instructions sont exécutées par un processeur (23).

12. Elément optique (5), tel qu'un verre ophtalmique, apte à être connecté à un réseau de communication, comportant :
- une mémoire (24) adaptée pour stocker un identifiant attribué à l'élément optique pour router des données via le réseau en fonction dudit identifiant.

13. Elément optique selon la revendication 12, dans lequel l'élément optique est relié à une interface de communication (2) apte à recevoir une instruction envoyée par un dispositif électronique connecté au réseau de communication, et dans lequel l'élément optique comporte en outre :
- un processeur (23) apte à exécuter l'instruction.

14. Système comportant :
- un élément optique (5) selon l'une des revendications 12 ou 13 ;
- un terminal (11) comprenant un capteur et connecté au réseau de communication, le terminal comprenant en outre un processeur adapté pour effectuer les opérations suivantes :
• réception d'une mesure acquise par le capteur ;
• détermination, à partir de la mesure acquise par le capteur compris dans le terminal, d'une instruction à destination de l'élément optique.

15. Dispositif ophtalmique (12) destiné à être porté par un utilisateur, comportant :
- au moins un élément optique (5) selon l'une des revendications 12 ou 13 ;
- un capteur (8, 10) ;
- un processeur (23) adapté pour effectuer les opérations suivantes :
• réception d'une mesure acquise par le capteur ;
• détermination d'une instruction à partir de la mesure acquise par le capteur.
